# EUROPEAN PATENT SPECIFICATION

(11) **EP 4 405 209 B1**
(45) Date of publication and mention of the grant of the patent: **29.10.2025**
(21) Application number: 22793389.2
(22) Date of filing: 20.09.2022
(51) Int. Cl.: B60P 7/08, B60P 7/135, B65D 90/00

(54) **SYSTEM FOR LASHING A CONTAINER LOAD AND USE THEREOF**
SYSTEM ZUM VERZURREN EINER CONTAINERLADUNG UND VERWENDUNG DAVON
SYSTÈME D'AMARRAGE D'UNE CHARGE DE CONTENEUR ET SON UTILISATION

(30) Priority: 20.09.2021 NL 2029209
(43) Date of publication of application: 31.07.2024
(73) Proprietor: Cordstrap B.V., 5807 GA Oostrum (NL)
(72) Inventor: VAN BERLO, Perry, 5807 GA Oostrum (NL)
(74) Representative: Brantsandpatents bv
(86) International application number: PCT/EP2022/076039
(87) International publication number: WO 2023/041793

(56) References cited:
- EP-A1- 2 128 044
- DE-A1- 102017 001 817
- ES-A1- 2 376 333

## Description

### FIELD OF THE INVENTION

The present invention relates to a system for lashing a container load and its use for securing a load in a container.

### BACKGROUND

During transport of loads in containers, the load is subjected to forces that are generated due to changes in speed, such as accelerations or braking, changing of direction, etc. These forces can damage the load or the infrastructure. In addition, they could lead to dangerous situations for the handlers of the transport.

Direct lashing is a technique used in the art that allows securing a load in a container wherein straps are attached to the container, often by means of lashing points, and subsequently closed at the front of the container by means of buckles. The straps can then be tensioned by means of a tensioner. This technique is known e.g. from DE 10 2017 001817 A1 or EP 2 128 044 A1. A problem with the currently used system is that the lashes used to secure a load often vary in stretch, which can result in the load not being equally supported. This results again in the aforementioned problems during transport.

It is the object of the current invention to provide a system that allows an equal burden on the load, wherein the different forces that are exerted on different places of the load are equal. Accordingly, more load can be secured.

### SUMMARY OF THE INVENTION

The present invention and embodiments thereof serve to provide a solution to one or more of above-mentioned disadvantages. To this end, the present invention relates to a system according to claim 1. In a second aspect, the present invention also describes a method of securing a load in a container according to claim 10.

### DESCRIPTION OF FIGURES

**Figure 1** shows a schematic representation of a container load secured with a system and method according to the current invention.
**Figure 2** shows a schematic representation of a container load secured in a 40 ft container with a system and method according to the current invention.

### DETAILED DESCRIPTION OF THE INVENTION

The present invention concerns a system for securing a load in a container, as well as a method for securing said load.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.*, any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

In a first aspect, the current invention provides for a system for lashing a load in a container, wherein said system comprises at least a first group and a second group of lashing straps, wherein within each group the straps have the same effective length, and wherein the effective length of the straps of said first group is greater than the effective length of the straps of the second group and wherein the straps the first group of straps have an effective stiffness which is different from said second group.

A container comprises a floor, a ceiling, side walls and an entry. The entry is usually lockable with doors.

In this context, "specific stiffness" (S) is the stiffness that a lashing of 1 unit of length has. In this context, the "effective stiffness" (K) of a lashing with effective length L is: K = S/L. (K in units of force/length). In this context, the "effective length" (L) of each lashing is the length as seen from the side combined with a part of the length that can slip towards the side from the front of the payload.

In an embodiment the effective length of the straps of the first group is at least 10%, at least 15%, at least 20%, at least 30%, at least 40%, at least 50% than the effective length of the straps of the second group.

In an embodiment, said first group will have an effective stiffness between 400 and 520 KN and said second group will have an effective stiffness between 200 and 300 KN.

In a further or another embodiment, the tensile strength of said first group of straps is between 4000 daN and 5500 daN as measured by DIN EN 12195-2 (October 1991). In an embodiment, the tensile strength of the second group of straps is between 2500 daN and 4000 daN as measured by DIN EN 12195-2 (October 1991).

In an embodiment, the effective length of the straps of the first group is between 3000 mm and 3400 mm. In an embodiment the effective length of the straps of the second group is between 1500 mm and 1800 mm.

In an embodiment, the system comprises a third group and a fourth group of lashing straps. The effective length of the straps of the third group differs at most 15% from the effective length of the straps of the first group, preferably at most 10%, more preferably at most 5%. The effective length of the straps of the fourth group differs at most 15% from the effective length of the straps of the second group, preferably at most 10%, more preferably at most 5%. The straps of the first group and the straps of the third group have an equal effective stiffness. The straps of the second group and the straps of the fourth group have an equal effective stiffness. A third group and a fourth group are advantageous for securing high and heavy loads in a container. For instance, the straps of the first group and the second group are secured to lashing points on the floor of the container and secure a bottom part of the load, while the straps of the third group and the fourth group are secured to lashing points on the ceiling of the container and secure a top part of the load. It is clear to a person skilled in the art that the first group and the second group can be switched with the third group and the fourth group.

In an embodiment the system comprises a first additional group of lashing straps and a second additional group of lashing straps. Each additional group has at least two straps, more preferably at least four straps. Within each additional group the straps have the same effective length. The effective length of the straps of said first additional group is greater than the effective length of the straps of the second additional group. The straps of the first group and the straps of the first additional group have an equal effective stiffness. The straps of the second group and the straps of the second additional group have an equal stiffness. This embodiment is advantageous for securing a load in a long container, such as a 40 ft container. The straps of the first additional group are placed in the container in a similar way as the straps of the first group and the straps of the second additional group are placed in the container in a similar way as the straps of the second group. The main difference is that the straps of the first additional group and the second additional group are used to secure only a first part of the load in the container that is placed the furthest from the entry of the container and that the straps of the first group and the second group are used to secure a second part of the load in the container that is placed against the first part of the load and closest to the entry of the container.

In an embodiment the system comprises a third additional group of straps and a fourth additional group of straps. The effective length of the straps of the third additional group differs at most 15% from the effective length of the straps of the first additional group, preferably at most 10%, more preferably at most 5%. The effective length of the straps of the fourth additional group differs at most 15% from the effective length of the straps of the second additional group, preferably at most 10%, more preferably at most 5%. The third additional group of straps and the fourth additional group of straps are used in a similar way as the previously described third group and fourth group of straps to secure the first part of the load. It is clear to a person skilled in the art that the first additional group and the second additional group can be switched with the third additional group and the fourth additional group.

In an embodiment, the effective length of the straps of the first and third group is between 3000 mm and 3400 mm. In an embodiment, the effective length of the second and fourth group is between 1500 mm and 1800 mm.

In an embodiment, the effective length of the straps of the first additional group is between 2400 mm and 2720 mm. In an embodiment, the effective length of the straps of the second additional group is between 1200 mm and 1440 mm.

In an embodiment, the effective length of the straps of the first additional group and the third additional group is between 2400 mm and 2720 mm. In an embodiment, the effective length of the straps of the second additional group and the fourth additional group is between 1200 mm and 1440 mm.

The straps are by preference polyester straps, more preferably polyester yarns, which may be woven polyester yarns or composite polyester yarns embedded in a polymer coating, whereby the polymer coating is polypropylene or polyolefins such as LDPE, HDPE, PP, EVA, EMA, EBA, EEA, etc. Preferably said coating is polypropylene. Other possible straps that can be used in accordance with the current invention comprise polyaramid fibers; nylon; natural fibers such as sisal; flax; and metal fibers.

The system further comprises means to securing the lashing ends of the straps. To that purpose, said system preferably comprises at least two, more preferably at least four buckles to secure the lashing ends of a group of straps and optionally corner protecting elements. There are various buckles known in the art which can be used in the context of the current invention.

The system may further comprise a tensioner for applying a tension on said securing means.

The system may also comprise a plurality of corner protecting elements. The latter are designed to be positioned against a corner of a load, and are typically provided with one or more apertures or slits that allow passage of the strap. Said apertures or slits ensure that lashing is placed at the ideal height in every container, ensuring a high level of consistency. Said elements further also distributes any impact force and protects cargo from damage. The corner protecting elements can be made from any material suited in the art, such as cardboard, plastic, foam, wood, kraft, etc. The corner elements are typically comprised of two panels which form an angle and which can be placed around a corner of a cargo or load.

The system may also comprise a group of vertical hang straps having a plurality of loops defined along the length of each strap. The loops of each vertical hang strap are configured to allow passage of the strap. Said loops ensure that lashing is placed at the ideal height in every container, ensuring a high level of consistency. Each of said vertical hang straps is configured to have one end attached to a lashing point on the ceiling and the opposite end attached to a lashing point on the floor of the container. The vertical hang straps are particularly advantageous if the cargo does not allow or require the use of corner protecting elements. In a further or another embodiment, vertical hang straps may be used in conjunction with corner protecting elements.

In order to enhance the usability of said system, a system suited to secure the complete load of one container can comprised in a box or bag. As such, the customer has all material at hand to ensure safe securing of a container.

Said system is specifically suited to secure a load in a 20 ft or 40 ft container, and to have a Maximal Securing Load of 150 KN to 160 KN.

In this context, "Maximal Securing Load" or "MSL" is defined as the allowable load capacity for a device used to secure cargo to a ship, container or other means by which said cargo is carried.

In a second aspect of the current invention, a method for lashing a load in a container is disclosed, said method comprises the following steps:
- Providing at least a first group of woven lashing straps, and at least a second group of lashing straps, each group having at least two lashing straps, wherein within each group the straps have the same effective length, and wherein the effective length of the straps of said first group is greater than the effective length of the straps of the second group and wherein the straps the first group of straps have an effective stiffness which is different from said second group;
- Securing at least two straps of the first group of straps to a first group of lashing points of a container, wherein said lashing points of the first group are located on opposite sides of said container, preferably on the container floor;
- Securing the second group of straps to a second group of lashing points, wherein said lashing points of the second first group are located on opposite sides of said container, preferably on the container floor;
- Securing the ends of the lashing straps of the first and second group by means of a buckle, at the entry side of the container, and at different heights, thereby securing a load that is present in said container.

Lashing points are known in the art and typically comprise elements present in a container that allow passing passage of a strap. An example of lashing point are D-rings. Lashing points can be present on various locations of a container, including the corners, the sidewalls, on the floor (close to the wall), on the ceiling of the container. In a preferred embodiment, lashing points are used that are present on the container floor, at the edge of the sidewall of a container. In order to make sure that the load is safely secured, each group of lashings will be secured at lashing points that are located at opposite sides of the container, for instance at the longitudinal side walls of said container.

When secured at a lashing point, typically by bringing the strap through an opening of said lashing points, the ends of the straps are brought around the load in a container, and finally a first strap end of a first strap belonging to a group will be joined with the first strap end of a second strap (belonging to a group) by means of a buckle. The same will be true for the second strap ends: again the second strap end of a first strap of a group will be joined with the second strap end of the second strap of the same group. Joining occurs typically at the side of the load facing the entry side of the container.

In an embodiment, the method comprises the additional steps of:
- Providing at least a first additional group of woven lashing straps, and at least a second additional group of lashing straps, each additional group having at least two lashing straps, wherein within each additional group the straps have the same effective length, and wherein the effective length of the straps of said first additional group is greater than the effective length of the straps of the second additional group, wherein the straps of the first group and the straps of the first additional group have an equal effective stiffness, and wherein the straps of the second group and the straps of the second additional group have an equal effective stiffness;
- Securing at least two straps of the first additional group of straps to a first additional group of lashing points of a container, wherein said lashing points of the first additional group are located on opposite sides of said container, preferably on the container floor, and wherein said lashing points of the first additional group are located further away from the entry side of the container than the lashing points of the first group;

- Securing the second additional group of straps to a second additional group of lashing points, wherein said lashing points of the second additional group are located on opposite sides of said container, preferably on the container floor, and wherein said lashing points of the second additional group are located further away from the entry side of the container than the lashing points of the second group;
- Securing the ends of the lashing straps of the first and second additional group by means of a buckle, wherein the lashing straps of the first and second additional group are secured at different heights, wherein the lashing straps of the first and second additional group are secured at a position further away from the entry side of the container than a position where the lashing straps of the first and second group are secured, thereby securing a part of the load that is present in said container.

The additional steps are preferably executed before the previously described method steps. This embodiment is advantageous for securing a load in a long container, such as a 40 ft container. The straps of the first additional group are placed in the container in a similar way as the straps of the first group and the straps of the second additional group are placed in the container in a similar way as the straps of the second group. The main difference is that the straps of the first additional group and the second additional group are used to secure only a first part of the load in the container that is placed the furthest from the entry of the container and that the straps of the first group and the second group are used to secure a second part of the load in the container that is placed against the first part of the load and closest to the entry of the container.

In an embodiment, the lashings when secured at a lashing point on the container floor form an angle between 0° and 60° with the container floor, more preferably between 5° and 50°, still more preferably 10° and 45°, even more preferably 15° and 40°.

In a further embodiment, corner protecting elements as described above are positioned at the corners of the load facing the entry side of the container, and the straps are brought through the apertures or slits of said corner elements.

In a preferred embodiment, a system as described in any of the above embodiments is used in the method for securing the load in a container. Preferably, said container is a 20 ft or 40 ft container, and said system has a Maximal Securing Load of 150 KN to 160 KN.

In yet another preferred embodiment two systems according to any of above embodiments are used, a first system using lashing points on the floor and a second system using two groups of lashing points on the ceiling. Furthermore, the ends of the corresponding lashings are subsequently secured by means of buckles.

A first system may comprise the first group and the second group of straps and a second system may comprise the third group and the fourth group of straps. It is clear to a person skilled in the art that first system may comprise the third group and the fourth group of straps and that the second system may comprise the first group and the second group of straps.

In a further or another embodiment, the lashings when secured at a lashing point on the ceiling of the container form an angle between 0° and 60° with the container ceiling, more preferably between 5° and 50°, still more preferably 10° and 45°, even more preferably 15° and 40°.

The invention is further described by the following non-limiting examples which further illustrate the invention, and are not intended to, nor should they be interpreted to, limit the scope of the invention.

### DESCRIPTION OF FIGURES

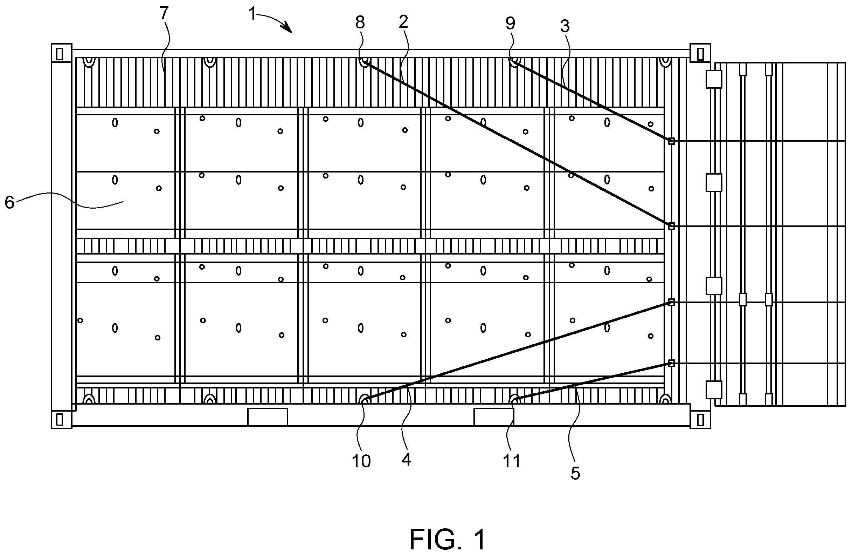

Figure 1 shows a schematic cross section of a container (7) provided with a cargo (6), which is secured by means of a system (1) and method as described herein. A first group of straps (2) having the longest length is brought around a first group of lashing points (8) present in a container (7), wherein a first strap is secured to a first lashing point on the container ceiling and the second strap is secured to a second lashing point on the opposite side of the container (not shown on Figure 1). A third group of straps (4) having similar dimensions to the first group (2) are secured in a similar way but are instead secured to a third group of lashing points (10) on the floor of the container. The second group of straps (3) is secured in a similar way to the first group (2), by making use of a second group of lashing points (9) located on the ceiling and closer to the container entry than the first group of lashing points (8). Consequently these straps (3) will be shorter than the first group of straps (2). A fourth group of straps (5) having dimensions similar to those of the second group (3) is secured in a similar way. The fourth group of straps (5) is instead secured to a fourth group of lashing points (11) on the floor of the container and closer to the entrance of said container than the third group of lashing points (10). The straps are subsequently brought around the cargo (6) present in the container, and through apertures of a corner protecting element (not shown in Figure 1) present at the corners of said cargo (6). Finally, the strap ends are joined by means of a buckle, at different heights of the cargo (6).

The container (7) in Figure 1 is a 20 ft container.

In other embodiments of the invention, a group may be comprised of more than two straps, such as four straps, or even more, depending on the situation or load that needs to be secured.

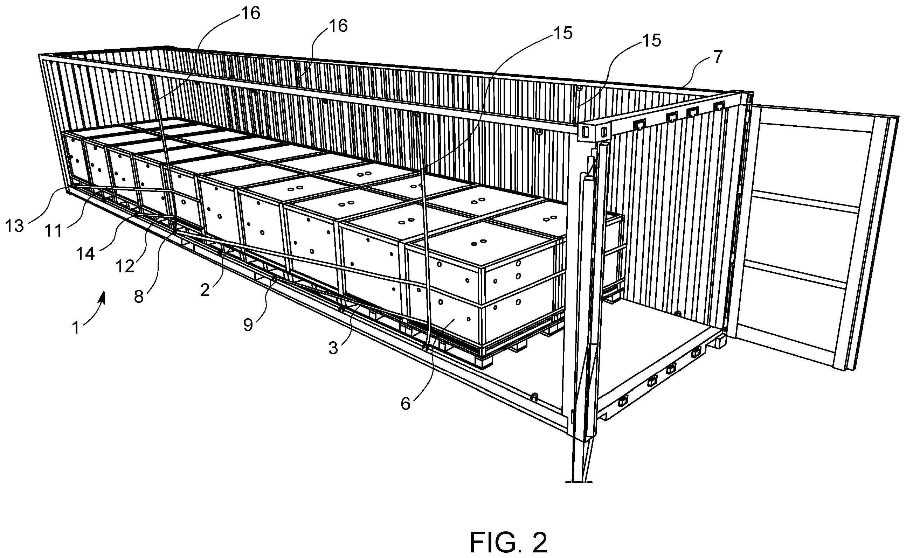

Figure 2 shows a schematic cross section of a 40 ft container (7) provided with a cargo (6), which is secured by means of a system (1) and method as described herein. A first group of straps (2) having the longest length is brought around a first group of lashing points (8) present in a container (7), wherein a first strap is secured to a first lashing point on the container floor and the second strap is secured to a second lashing point on the opposite side of the container (not shown on Figure 2). The first group of lashing points (8) is a bit past halfway the container, starting from the entry of the container. The second group of straps (3) is secured in a similar way to the first group (2), by making use of a second group of lashing points (9) located on the container floor and closer to the container entry than the first group of lashing points (8). Consequently, these straps (3) of the second group will be shorter than the first group of straps (2). The system (1) comprises vertical hang straps (15) having a plurality of loops along the length of each of the vertical hang straps (15). The straps of the first group (2) and the straps of the second group (3) are passed through a loop of a vertical hang strap (15) near the front of the load (6), so near the entry of the container (7). A strap of the first group (2) is passed through a loop of the vertical hang strap (15) that is higher than a loop through which a strap of the second group (3) is passed. A first end of each vertical hang strap (15) is attached to a lashing point on the floor of the container (7) and a second end of each vertical hang strap (15) is attached to a lashing point on the ceiling of the container (7). The straps are subsequently brought around the cargo (6) present in the container (7). Finally, the strap ends are joined by means of a buckle, at different heights of the cargo (6). In this particular embodiment, the system (1) comprises a first additional group of straps (11) and a second additional group of straps (12) to secure the load (6). The first additional group of straps (11) having a length longer than the second additional group of straps (12) is brought around a first additional group of lashing points (13) present in a container (7), wherein a first strap is secured to a first lashing point on the container floor and the second strap is secured to a second lashing point on the opposite side of the container (not shown on Figure 2). The first group of additional lashing points (13) is near the back of the container, starting from the entry of the container. The second additional group of straps (12) is secured in a similar way to the first additional group (11), by making use of a second additional group of lashing points (14) located on the container floor and near the first group of lashing points (8). Consequently, these straps (12) of the second additional group will be shorter than the first additional group of straps (11). The system (1) comprises vertical hang straps (16) having a plurality of loops along the length of each of the vertical hang straps (16). The straps of the first additional group (11) and the straps of the second additional group (12) are passed through a loop of a vertical hang strap (16) close to the middle of the load (6). A strap of the first additional group (11) is passed through a loop of the vertical hang strap (16) that is higher than a loop through which a strap of the second additional group (12) is passed. A first end of each vertical hang strap (16) is attached to a lashing point on the floor of the container (7) of the first group of lashing points (8) and a second end of each vertical hang strap (16) is attached to a lashing point on the ceiling of the container (7). The straps of the first additional group (11) and the second additional group (12) are subsequently brought around half of the cargo (6) present in the container (7). Finally, the strap ends are joined by means of a buckle, at different heights of the cargo (6). It is clear for a person skilled in the art that in this particular embodiment first half of the cargo (6) is placed inside the container (7) and secured with the straps of the first additional group of straps (11) and the second additional group of straps (12), and that subsequently a next half of the cargo (6) is placed inside the container (7) and secured with the straps of the first group of straps (2) and the second group of straps (3).

## Claims

1. A system (1) for lashing a load in a container, wherein said system comprises at least a first group (2) and a second group (3) of lashing straps, each group having at least two straps and more preferably four straps, wherein within each group the straps have the same effective length, and wherein the effective length of the straps of said first group is greater than the effective length of the straps of the second group
the system being **characterized in that**
the straps the first group (2) straps have an effective stiffness which is larger than said second group (3).

2. System according to claim 1 wherein the effective length of the straps of the first group (2) are at least 10% longer than the effective length of the straps of the second group (3).

3. System according to any of the previous claims, **characterized in that**, the first group of lashing straps have an effective stiffness between 400 and 520 KN and the second group of lashing straps have an effective stiffness between 200 and 300 KN.

4. System according to any of the previous claims, wherein the system comprises a first additional group (11) and a second additional group (12) of lashing straps, each additional group having at least two straps and more preferably four straps, wherein within each additional group the straps have the same effective length, wherein the effective length of the straps of said first additional group is greater than the effective length of the straps of the second additional group, wherein the straps of the first group and the straps of the first additional group have an equal effective stiffness, and wherein the straps of the second group and the straps of the second additional group have an equal effective stiffness.

5. System according to any of the previous claims wherein the effective length of the the straps of the first group (2) is between 3000 mm and 3400 mm.

6. System according to any of the previous claims wherein the effective length of the second group (3) is between 1500 mm and 1800 mm.

7. System according to any of the previous claims, wherein the tensile strength of the first group (2) of straps is between 4000 daN and 5500 daN as measured by DIN EN 12195-2 (October 1991).

8. System according to any of the previous claims, wherein the tensile strength of the second group (3) of straps is between 2500 daN and 4000 daN as measured by DIN EN 12195-2 (October 1991).

9. System according to any of the previous claims, wherein said straps are woven polyester straps.

10. Method for lashing a load in a container said method comprises:
- Providing at least a first group (2) of woven lashing straps, and at least a second group (3) of lashing straps, each group having at least two lashing straps, wherein within each group the straps have the same effective length, and wherein the effective length of the straps of said first group is greater than the effective length of the straps of the second group and wherein the straps the first group of straps have an effective stiffness which is larger than said second group;
- Securing at least two straps of the first group of straps to a first group of lashing points (8) of a container (7), wherein said lashing points of the first group are located on opposite sides of said container, preferably on the container floor;
- Securing the second group of straps to a second group of lashing points (9), wherein said lashing points of the second group are located on opposite sides of said container, preferably on the container floor;
- Securing the ends of the lashing straps of the first and second group by means of a buckle, at the entry side of the container (7), and at different heights, thereby securing a load that is present in said container.

11. Method according to claim 10, wherein the lashings when secured at a lashing point on the container floor form an angle between 0° and 60° with the container floor.

12. Method according to any of claims 10 or 11, wherein a system according to any of the claims 1 to 9 is used.

13. Method according to any of claims 10-12, wherein a further two lashing the straps of the first group ; (2) and a further two lashing straps of the second group (3) are secured to lashing points located on the ceiling of the container, and wherein the ends of the corresponding lashings are subsequently secured by means of buckles

14. Method according to any of claims 10-13, wherein the lashings when secured at a lashing point on the ceiling of the container form an angle between 0° and 60° with the container ceiling.

15. Method according to any of claims 10-14, wherein the method comprises the additional steps of:
- Providing at least a first additional group (11) of woven lashing straps, and at least a second additional group (12) of lashing straps, each additional group having at least two lashing straps, wherein within each additional group the straps have the same effective length, and wherein the effective length of the straps of said first additional group is greater than the effective length of the straps of the second additional group, wherein the straps of the first group and the straps of the first additional group have an equal effective stiffness, and wherein the straps of the second group and the straps of the second additional group have an equal effective stiffness;
- Securing at least two straps of the first additional group (11) of straps to a first additional group (13) of lashing points of a container, wherein said lashing points of the first additional group are located on opposite sides of said container, preferably on the container floor, and wherein said lashing points of the first additional group are located further away from the entry side of the container than the lashing points of the first group;
- Securing the second additional group (12) of straps to a second additional group (14) of lashing points, wherein said lashing points of the second additional group are located on opposite sides of said container, preferably on the container floor, and wherein said lashing points of the second additional group are located further away from the entry side of the container than the lashing points of the second group;
- Securing the ends of the lashing straps of the first and second additional group by means of a buckle, wherein the lashing straps of the first and second additional group are secured at different heights, wherein the lashing straps of the first and second additional group are secured at a position further away from the entry side of the container than a position where the lashing straps of the first and second group are secured, thereby securing a part of the load that is present in said container.

## Patentansprüche

1. System (1) zum Verzurren einer Ladung in einem Container, wobei das System mindestens eine erste Gruppe und eine zweite Gruppe (3) von Verzurrungsgurten umfasst, wobei jede Gruppe mindestens zwei Gurte und bevorzugter vier Gurte aufweist, wobei die Gurte in jeder Gruppe die gleiche effektive Länge aufweisen und wobei die effektive Länge der Gurte der ersten Gruppe größer als die effektive Lange der Gurte der zweiten Gruppe ist, wobei das System **dadurch gekennzeichnet ist, dass** die Gurte der ersten Gruppe (2) von Gurten eine effektive Steifigkeit aufweisen, die größer als die der zweiten Gruppe (3) ist.

2. System nach Anspruch 1, wobei die effektive Länge der Gurte der ersten Gruppe (2) mindestens 10 % länger als die effektive Länge der Gurte der zweiten Gruppe (3) ist.

3. System nach einem der vorhergehenden Ansprüche, **dadurch gekennzeichnet, dass** die erste Gruppe aus Verzurrungsgurten eine effektive Steifigkeit zwischen 400 und 520 kN aufweist und die zweite Gruppe aus Verzurrungsgurten eine effektive Steifigkeit zwischen 200 und 300 kN aufweist.

4. System nach einem der vorhergehenden Ansprüche, wobei das System eine erste zusätzliche Gruppe (11) und eine zweite zusätzliche Gruppe (12) von Verzurrungsgurten umfasst, wobei jede zusätzliche Gruppe mindestens zwei Gurte und bevorzugter vier Gurte umfasst, wobei die Gurte in jeder zusätzlichen Gruppe die gleiche effektive Länge aufweisen, wobei die effektive Länge der Gurte der ersten zusätzlichen Gruppe größer als die effektive Lange der Gurte der zweiten zusätzlichen Gruppe ist, wobei die Gurte der ersten Gruppe und die Gurte der ersten zusätzlichen Gruppe die gleiche effektive Steifigkeit aufweisen und wobei die Gurte der zweiten Gruppe und die Gurte der zweiten zusätzlichen Gruppe die gleiche effektive Steifigkeit aufweisen.

5. System nach einem der vorhergehenden Ansprüche, wobei die effektive Länge der Gurte der ersten Gruppe (2) zwischen 3000 mm und 3400 mm beträgt.

6. System nach einem der vorhergehenden Ansprüche, wobei die effektive Länge der Gurte der zweiten Gruppe (3) zwischen 1500 mm und 1800 mm beträgt.

7. System nach einem der vorhergehenden Ansprüche, wobei die Zugfestigkeit der ersten Gruppe (2) von Gurten zwischen 4000 daN und 5500 daN beträgt, gemessen gemäß DIN EN 12195-2 (Oktober 1991).

8. System nach einem der vorhergehenden Ansprüche, wobei die Zugfestigkeit der zweiten Gruppe (3) von Gurten zwischen 2500 daN und 4000 daN beträgt, gemessen gemäß DIN EN 12195-2 (Oktober 1991).

9. System nach einem der vorhergehenden Ansprüche, wobei die Gurte Polyestergewebegurte sind.

10. Verfahren zum Verzurren einer Ladung in einem Container, wobei das Verfahren Folgendes umfasst:
- Bereitstellen mindestens einer ersten Gruppe (2) von Gewebeverzurrungsgurten und mindestens einer zweiten Gruppe (3) von Verzurrungsgurten, wobei jede Gruppe mindestens zwei Gurte aufweist, wobei die Gurte in jeder Gruppe die gleiche effektive Länge aufweisen und wobei die effektive Länge der Gurte der ersten Gruppe größer als die effektive Länge der Gurte der zweiten Gruppe ist und wobei die Gurte der ersten Gruppe aus Gurten eine effektive Steifigkeit aufweisen, die größer als die der zweiten Gruppe ist,
- Sichern von mindestens zwei Gurten der ersten Gruppe von Gurten an einer ersten Gruppe von Verzurrungspunkten (8) eines Containers (7), wobei sich die Verzurrungspunkte der ersten Gruppe an gegenüberliegenden Seiten des Containers befinden, vorzugsweise auf dem Containerboden,
- Sichern der zweiten Gruppe von Gurten an einer zweiten Gruppe von Verzurrungspunkten (9), wobei sich die Verzurrungspunkte der zweiten Gruppe an gegenüberliegenden Seiten des Containers befinden, vorzugsweise auf dem Containerboden,
- Sichern der Enden der Verzurrungsgurte der ersten und der zweiten Gruppe mittels einer Schnalle an der Eingangsseite des Containers (7) und auf unterschiedlichen Höhen, wodurch eine Ladung gesichert wird, die in dem Container vorhanden ist.

11. Verfahren nach Anspruch 10, wobei die Verzurrungen, wenn sie an einem Verzurrungspunkt auf dem Containerboden gesichert sind, einen Winkel zwischen 0° und 60° zum Containerboden bilden.

12. Verfahren nach einem der Ansprüche 10 bis 11, wobei ein System nach einem der Ansprüche 1 bis 9 verwendet wird.

13. Verfahren nach einem der Ansprüche 10 bis 12, wobei weitere zwei Verzurrungsgurte der ersten Gruppe (2) und weitere zwei Verzurrungsgurte der zweiten Gruppe (3) an Verzurrungspunkten gesichert werden, die sich an der Decke des Containers befinden, und wobei danach die Enden der entsprechenden Verzurrungen mittels Schnallen gesichert werden.

14. Verfahren nach einem der Ansprüche 10 bis 13, wobei die Verzurrungen, wenn sie an einem Verzurrungspunkt an der Decke des Containers befestigt sind, einen Winkel zwischen 0° und 60° zur Containerdecke bilden.

15. Verfahren nach einem der Ansprüche 10 bis 14, wobei das Verfahren die folgenden zusätzlichen Schritte umfasst:
- Bereitstellen mindestens einer ersten zusätzlichen Gruppe (11) von Gewebeverzurrungsgurten und mindestens einer zweiten zusätzlichen Gruppe (12) von Verzurrungsgurten, wobei jede zusätzliche Gruppe mindestens zwei Verzurrungsgurte aufweist, wobei die Gurte in jeder zusätzlichen Gruppe die gleiche effektive Länge aufweisen und wobei die effektive Länge der Gurte der ersten zusätzlichen Gruppe größer als die effektive Länge der Gurte der zweiten zusätzlichen Gruppe ist und wobei die Gurte der ersten Gruppe und die Gurte der ersten zusätzlichen Gruppe die gleiche effektive Steifigkeit aufweisen und wobei die Gurte der zweiten Gruppe und die Gurte der zweiten zusätzliche Gruppe die gleiche effektive Steifigkeit aufweisen,
- Befestigen von mindestens zwei Gurten der ersten zusätzlichen Gruppe (11) von Gurten an einer ersten zusätzlichen Gruppe (13) von Verzurrungspunkten eines Containers, wobei sich die Verzurrungspunkte der ersten zusätzlichen Gruppe an gegenüberliegenden Seiten des Containers befinden, vorzugsweise auf dem Containerboden, und wobei die Verzurrungspunkte der ersten zusätzlichen Gruppe weiter entfernt von der Eingangsseite des Containers sind als die Verzurrungspunkte der ersten Gruppe,
- Sichern der zweiten zusätzlichen Gruppe (12) von Gurten an einer zweiten zusätzlichen Gruppe (14) von Verzurrungspunkten, wobei sich die Verzurrungspunkte der zweiten zusätzlichen Gruppe an gegenüberliegenden Seiten des Containers befinden, vorzugsweise auf dem Containerboden, und wobei die Verzurrungspunkte der zweiten zusätzlichen Gruppe weiter entfernt von der Eingangsseite des Containers sind als die Verzurrungspunkte der zweiten Gruppe,
- Sichern der Enden der Verzurrungsgurte der ersten und der zweiten zusätzlichen Gruppe mittels einer Schnalle, wobei die Verzurrungsgurte der ersten und der zweiten zusätzlichen Gruppe auf unterschiedlichen Höhen befestigt werden, wobei die Verzurrungsgurte der ersten und der zweiten zusätzlichen Gruppe an einer Position befestigt werden, die weiter von der Eingangsseite des Containers entfernt ist als eine Position, an der die Verzurrungsgurte der ersten und der zweiten Gruppe gesichert sind, wodurch eine Ladung gesichert wird, die in dem Container vorhanden ist.

## Revendications

1. Système (1) permettant d'arrimer une charge dans un conteneur, dans lequel ledit système comprend au moins un premier groupe (2) et un second groupe (3) de sangles d'arrimage, chaque groupe ayant au moins deux sangles et, de préférence, quatre sangles, dans lequel, au sein de chaque groupe, les sangles ont la même longueur effective, et dans lequel la longueur effective des sangles dudit premier groupe est supérieure à la longueur effective des sangles du second groupe, le système étant **caractérisé en ce que** les sangles du premier groupe (2) de sangles ont une rigidité effective supérieure à celle dudit second groupe (3).

2. Système selon la revendication **1,** dans lequel la longueur effective des sangles du premier groupe (2) est supérieure d'au moins 10 % à la longueur effective des sangles du second groupe (3).

3. Système selon l'une quelconque des revendications précédentes, **caractérisé en ce que**, le premier groupe de sangles d'arrimage a une rigidité effective comprise entre 400 et 520 KN et le second groupe de sangles d'arrimage a une rigidité effective comprise entre 200 et 300 KN.

4. Système selon l'une quelconque des revendications précédentes, dans lequel le système comprend un premier groupe supplémentaire (11) et un second groupe supplémentaire (12) de sangles d'arrimage, chaque groupe supplémentaire ayant au moins deux sangles et, plus préférentiellement, quatre sangles, dans lequel, dans chaque groupe supplémentaire, les sangles ont la même longueur effective, dans lequel la longueur effective des sangles dudit premier groupe supplémentaire est supérieure à la longueur effective des sangles du second groupe supplémentaire, dans lequel les sangles du premier groupe et les sangles du premier groupe supplémentaire ont une rigidité effective égale, et dans lequel les sangles du second groupe et les sangles du second groupe supplémentaire ont une rigidité effective égale.

5. Système selon l'une quelconque des revendications précédentes, dans lequel la longueur effective des sangles du premier groupe (2) est comprise entre 3000 mm et 3400 mm.

6. Système selon l'une quelconque des revendications précédentes, dans lequel la longueur effective du second groupe (3) est comprise entre 1500 mm et 1800 mm.

7. Système selon l'une quelconque des revendications précédentes, dans lequel la résistance à la traction du premier groupe (2) de sangles est comprise entre 4000 daN et 5500 daN, mesurée selon la norme DIN EN 12195-2 (octobre 1991).

8. Système selon l'une quelconque des revendications précédentes, dans lequel la résistance à la traction du second groupe (3) de sangles est comprise entre 2500 daN et 4000 daN, mesurée selon la norme DIN EN 12195-2 (octobre 1991).

9. Système selon l'une quelconque des revendications précédentes, dans lequel lesdites sangles sont des sangles en polyester tissé.

10. Procédé permettant d'arrimer une charge dans un conteneur, ledit procédé comprenant :
- la fourniture d'au moins un premier groupe (2) de sangles d'arrimage tissées, et d'au moins un second groupe (3) de sangles d'arrimage, chaque groupe ayant au moins deux sangles d'arrimage, dans lequel, dans chaque groupe, les sangles ont la même longueur effective, et dans lequel la longueur effective des sangles dudit premier groupe est supérieure à la longueur effective des sangles du second groupe et dans lequel les sangles du premier groupe ont une rigidité effective qui est supérieure à celle du second groupe ;
- la fixation d'au moins deux sangles du premier groupe de sangles à un premier groupe de points d'arrimage (8) d'un conteneur (7), dans lequel lesdits points d'arrimage du premier groupe sont situés sur des côtés opposés dudit conteneur, de préférence sur le plancher du conteneur ;
- la fixation du second groupe de sangles à un second groupe de points d'arrimage (9), dans lequel lesdits points d'arrimage du second groupe sont situés sur des côtés opposés dudit conteneur, de préférence sur le plancher du conteneur ;
- la fixation des extrémités des sangles d'arrimage du premier et du second groupe au moyen d'une boucle, du côté de l'entrée du conteneur (7) et à des hauteurs différentes, arrimant ainsi la charge présente dans ledit conteneur.

11. Procédé selon la revendication 10, dans lequel les sangles, lorsqu'elles sont fixées à un point d'arrimage sur le plancher du conteneur, forment un angle compris entre 0° et 60° avec le plancher du conteneur.

12. Procédé selon l'une quelconque des revendications 10 ou 11, dans lequel un système selon l'une quelconque des revendications 1 à 9 est utilisé.

13. Procédé selon l'une quelconque des revendications 10 à 12, dans lequel deux autres sangles d'arrimage du premier groupe (2) et deux autres sangles d'arrimage du second groupe (3) sont fixées à des points d'arrimage situés sur le plafond du conteneur, et dans lequel les extrémités des sangles correspondantes sont ensuite fixées au moyen de boucles.

14. Procédé selon l'une quelconque des revendications 10 à 13, dans lequel les sangles, lorsqu'elles sont fixées à un point d'arrimage sur le plafond du conteneur, forment un angle compris entre 0 et 60° avec le plafond du conteneur.

15. Procédé selon l'une quelconque des revendications 10 à 14, dans lequel le procédé comprend les étapes supplémentaires consistant à :
- fournir au moins un premier groupe supplémentaire (11) de sangles d'arrimage tissées et au moins un second groupe supplémentaire (12) de sangles d'arrimage, chaque groupe supplémentaire ayant au moins deux sangles d'arrimage, dans lequel, au sein de chaque groupe supplémentaire, les sangles ont la même longueur effective, et dans lequel la longueur effective des sangles dudit premier groupe supplémentaire est supérieure à la longueur effective des sangles du second groupe supplémentaire, dans lequel les sangles du premier groupe et les sangles du premier groupe supplémentaire ont une rigidité effective égale, et dans lequel les sangles du second groupe et les sangles du second groupe supplémentaire ont une rigidité effective égale ;
- la fixation d'au moins deux sangles du premier groupe supplémentaire (11) de sangles à un premier groupe supplémentaire (13) de points d'arrimage d'un conteneur, dans lequel lesdits points d'arrimage du premier groupe supplémentaire sont situés sur des côtés opposés dudit conteneur, de préférence sur le plancher du conteneur, et dans lequel lesdits points d'arrimage du premier groupe supplémentaire sont situés plus loin du côté de l'entrée du conteneur que les points d'arrimage du premier groupe ;
- la fixation du second groupe supplémentaire (12) de sangles à un second groupe supplémentaire (14) de points d'arrimage, dans lequel lesdits points d'arrimage du second groupe supplémentaire sont situés sur des côtés opposés du conteneur, de préférence sur le plancher du conteneur, et dans lequel lesdits points d'arrimage du second groupe supplémentaire sont situés plus loin du côté de l'entrée du conteneur que les points d'arrimage du second groupe ;
- la fixation des extrémités des sangles d'arrimage du premier et du second groupe supplémentaire au moyen d'une boucle, dans lequel les sangles d'arrimage du premier et du second groupe supplémentaire sont fixées à des hauteurs différentes, dans lequel les sangles d'arrimage du premier et du second groupe supplémentaire sont fixées à une position plus éloignée du côté de l'entrée du conteneur qu'une position où les sangles d'arrimage du premier et du second groupe sont fixées, arrimant ainsi une partie de la charge qui est présente dans ledit conteneur.
